(19) Europäisches Patentamt / European Patent Office / Office européen des brevets

(11) **EP 3 067 539 B1**

(12) **FASCICULE DE BREVET EUROPEEN**

(45) Date de publication et mention
de la délivrance du brevet:
**23.09.2020 Bulletin 2020/39**

(51) Int Cl.:
*F02D 41/00* *(2006.01)*  *G05B 13/04* *(2006.01)*
*F02D 41/14* *(2006.01)*

(21) Numéro de dépôt: **16159772.9**

(22) Date de dépôt: **11.03.2016**

(54) **PROCÉDÉ DE DÉTERMINATION DE LA VITESSE DE ROTATION DU TURBOCOMPRESSEUR D'UN MOTEUR À COMBUSTION INTERNE DE VÉHICULE AUTOMOBILE**

VERFAHREN ZUR BESTIMMUNG DER DREHGESCHWINDIGKEIT EINES TURBOLADERS EINES KRAFTFAHRZEUGVERBRENNUNGSMOTORS

METHOD FOR DETERMINING THE ROTATIONAL SPEED OF THE TURBOCHARGER OF AN INTERNAL COMBUSTION ENGINE OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2015 FR 1552029**

(43) Date de publication de la demande:
**14.09.2016 Bulletin 2016/37**

(73) Titulaire: **Renault S.A.S.**
**92100 Boulogne-Billancourt (FR)**

(72) Inventeurs:
• **TALON, Vincent**
**69007 LYON (FR)**
• **EL-HADEF, Jamil**
**70300 ESBOZ-BREST (FR)**
• **CHAMAILLARD, Yann**
**45130 LE BARDON (FR)**
• **COLIN, Guillaume**
**45160 OLIVET (FR)**

(56) Documents cités:
**WO-A1-2012/013881    GB-A- 2 449 166**

• **Anderson P: "Air Charge Estimation in Turbocharged Spark Ignition Engines (Thesis 989)", , 1 janvier 2005 (2005-01-01), pages FP-231, XP002753810, Linkoping, Sweden Extrait de l'Internet: URL:https://www.fs.isy.liu.se/Publications /PhD/05_PhD_989_PA.pdf [extrait le 2016-02-03]**
• **ANSTETT, F. ET AL.: "Polytopic observer design for LPV systems based on minimal convex polytope finding", JOURNAL OF ALGORITHMS AND COMPUTATIONAL TECHNOLOGY, vol. 2009, no. 3(1), 29 juillet 2009 (2009-07-29), pages 23-43, XP008178864, DOI: 10.1260/174830109787186569**

EP 3 067 539 B1

**Description**

L'invention a pour domaine technique la commande des moteurs à combustion interne, et plus particulièrement la détermination des paramètres de fonctionnement de tels moteurs.

L'accroissement des normes de dépollution oblige à reconcevoir le contrôle des moteurs pour véhicules automobiles et en particulier le contrôle de l'injection et de la chaine d'air des moteurs essence et diesel. Aujourd'hui, les définitions techniques des moteurs sont de plus en plus complexes et incluent notamment de plus en plus d'actionneurs présentant des complexités variables de pilotage et de mise au point. En particulier, un système de suralimentation de type turbocompresseur va progressivement équiper tous les véhicules. La connaissance de la vitesse de rotation du couple compresseur/turbine est primordiale pour le contrôle, pour les raisons suivantes.

Elle permet, par exemple, de quantifier l'état thermodynamique du compresseur et de la turbine. Cette information peut être notamment utilisée pour optimiser le fonctionnement du moteur ou pré-diagnostiquer les risques de casse moteur un disfonctionnement.

Elle peut intervenir directement dans les stratégies de contrôle du type « model-based » ou « feed-forward » (pré-positionnements statiques ou dynamiques des actionneurs).

La connaissance de la vitesse de rotation du turbocompresseur s'avère de plus en plus importante pour l'élaboration et l'exécution des nouvelles lois de contrôle, notamment celles dites « model-based ». Cependant, l'adoption de telles lois de contrôle avancées ne peut être motivée que par un fort gain en performances, combiné à un maintien du cout matériel. Dans cette optique, l'ajout de capteurs supplémentaires, comme par exemple un capteur de vitesse de rotation du turbocompresseur, n'est pas envisageable pour une production en série de grands volumes.

Actuellement la vitesse de rotation du turbocompresseur est obtenue par un capteur sur banc moteur ou est statiquement estimée à partir des cartographies de la turbine et/ou du compresseur. Le désavantage principal de cette méthode est sa nature de « boucle ouverte ».

Il n'existe à l'heure actuelle aucune solution à ce problème technique qui fonctionne en boucle fermée.

De l'état de la technique antérieur, on connait les documents suivants.

Le document US 2009 / 0314082 divulgue une estimation de la vitesse de rotation de la turbine ou du turbocompresseur en boucle ouverte à partir des cartographies compresseur et turbine. L'estimation est appliquée au cas d'un moteur à double turbocompresseur. L'estimation est réalisée en boucle ouverte, donc peu robuste.

Le document JP 2003 / 328841 divulgue une estimation de la vitesse d'un compresseur et d'une turbine par lecture de cartographies. L'estimation est réalisée en boucle ouvert donc sans garantie de robustesse et extrêmement dépendante des méthodologies d'interpolation et d'extrapolation des cartographies du compresseur et de la turbine.

Le document « Global Airpath Control for a Turbocharged Diesel HCCI Engine » publié dans « Oil & Gas Science and Technology - Rev. IFP, Vol. 63 (2008), No. 4, pp. 553-561 DOI: 10.2516/ogst:2008036 » divulgue une stratégie de modélisation de la vitesse de rotation d'un turbocompresseur. L'évolution de la vitesse de rotation du turbocompresseur est obtenue à partir d'une balance de puissance au niveau de l'axe qui relie le compresseur et la turbine. Chacune des puissances est obtenue à partir des cartographies statiques fournies par le constructeur. La stratégie d'extrapolation des points n'est pas détaillée. L'inertie des collecteurs d'admission et d'échappement est négligée par rapport à la dynamique du turbocompresseur. La vitesse se reconstruit en inversant le modèle ainsi écrit et donc les cartographies statiques citées ci-dessus.

Le document WO 2012/013881 A1 divulgue un observateur d'état qui est basé sur un modèle de Kalman linéarisé autour d'un point de fonctionnement du moteur à combustion interne.

Le document « Modeling and Control of the Air System of a Turbocharged Gasoline Engine » publié dans « Control Engineering Practice, Volume 19, Issue 3, March 2011, Pages 287-297, ISSN 0967-0661, 10.1016/j.conengprac.2009.11.006 » divulgue également une stratégie de modélisation de la vitesse de rotation d'un turbocompresseur. Le modèle utilisé repose sur la corrélation qui existe entre la vitesse de rotation d'un turbocompresseur et le rapport de compression. Le carré de la vitesse de rotation du turbocompresseur est estimé de manière linéaire par rapport au rapport de compression.

Comme précédemment, les dynamiques dans les collecteurs d'admission et d'échappement sont négligées.

Il existe donc un besoin pour une détermination de la vitesse de rotation du turbocompresseur sans ajout de capteurs.

L'invention a pour objet un procédé de détermination de la vitesse de rotation du turbocompresseur d'un moteur à combustion interne de véhicule automobile, muni d'au moins un circuit de recirculation partielle des gaz d'échappement à haute pression piqué entre le collecteur d'échappement et le collecteur d'admission.

Le procédé comprend les étapes suivantes:

on détermine un vecteur des mesures accessibles comprenant la mesure de la pression avant turbine, de la pression dans le collecteur d'admission et de la pression après l'échangeur thermique de gaz suralimenté,
on détermine l'écart entre le vecteur des mesures accessibles et le vecteur des mesures accessibles correspondant issu d'un observateur,

on détermine un vecteur des dérivées temporelles des variables observées en fonction de l'écart entre le vecteur des mesures accessibles et le vecteur des mesures accessibles correspondant issu de l'observateur, et

on détermine un vecteur des variables observées par intégration du vecteur des dérivées temporelles des variables observées,

le vecteur des variables observées comprenant des valeurs observées correspondant aux valeurs du vecteur des mesures accessibles et la vitesse de rotation du turbocompresseur.

On peut déterminer le vecteur des dérivées temporelles des variables observées en réalisant les étapes suivantes :

on détermine le gain de l'observateur en fonction de l'écart entre un vecteur des mesures accessibles et un vecteur des mesures accessibles issues de l'observateur,

on détermine une première matrice d'état et une deuxième matrice d'état en fonction du modèle prédéterminé et de mesures, estimations et consignes de paramètres de fonctionnement du moteur à combustion interne, et

on détermine le vecteur des dérivées temporelles des variables observées en sommant le gain de l'observateur, le produit de la première matrice d'état par les valeurs de l'observateur des variables observées et la deuxième matrice d'état.

On peut définir un polytope, puis on détermine un gain de l'observateur aux sommets du polytope, puis on interpole le gain de l'observateur aux sommets du polytope sur tout le volume du polytope pour obtenir le gain de l'observateur en chaque point.

En variante, on peut définir un polytope, puis on détermine un gain de l'observateur constant sur le polytope, fonction de la première matrice d'état et du vecteur des mesures accessibles.

Dans tous les cas, le polytope peut être convexe et défini par les valeurs maximales et minimales de la vitesse de rotation du moteur, du rendement volumétrique, de la richesse de mélange, de la température du collecteur d'admission et de la température en amont de la turbine.

On peut déterminer la première matrice d'état en fonction de la vitesse de rotation du moteur, du volume de cylindrée, du volume du collecteur d'échappement, du rendement volumique, de la température en amont de la turbine, de la température dans le collecteur d'admission, du volume avant la turbine et de la richesse de mélange.

On peut déterminer la deuxième matrice d'état en fonction du coefficient adiabatique, de la constante des gaz parfaits, de la température en aval du compresseur, de la température après échangeur, du volume après échangeur, éventuellement de la température des gaz EGR après échangeur EGR, de la température collecteur, du volume collecteur, de la capacité calorifique à pression constante température en amont du compresseur, du rendement du compresseur, du rapport de compression, du rapport de détente, du rendement turbine, et de la température dans le collecteur d'échappement.

Le procédé présente l'avantage d'une économie de conception et production tout en maintenant la disponibilité de la vitesse de rotation du turbocompresseur à des fins d'optimisation et de surveillance. De plus, ce procédé permet de rendre disponible cette mesure dans des contextes où l'utilisation d'un capteur est impossible car il est prohibé de percer le carter du compresseur pour y insérer un capteur physique. De plus, ce procédé permet une surveillance accrue du moyen d'essais et ainsi d'éviter la casse des moteurs sur les bancs d'endurance.

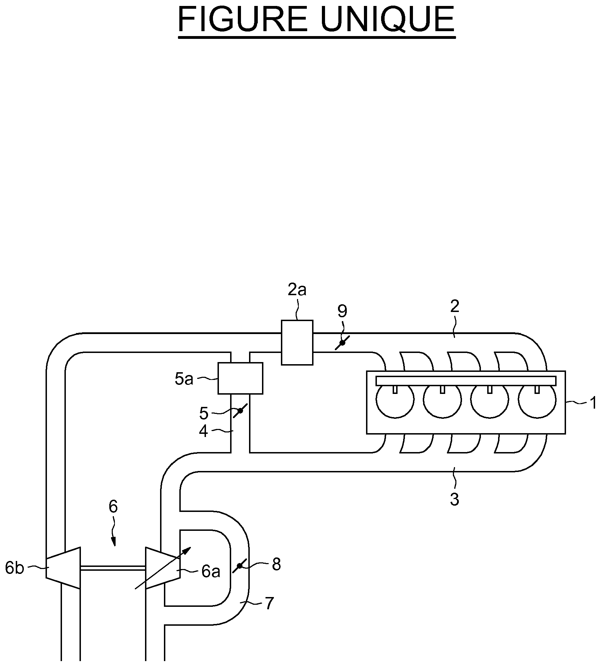

D'autres buts, caractéristiques et avantages de l'invention apparaîtront à la lecture de la description suivante, donnée uniquement à titre d'exemple non limitatif et faite en référence au dessin annexé sur lequel la figure unique illustre un moteur à combustion interne comprenant un circuit de recirculation partielle des gaz d'échappement à haute pression.

Sur la figure unique, on peut voir un moteur à combustion interne 1 muni d'un collecteur d'admission 2 et d'un collecteur d'échappement 3 reliés ensemble par une conduite de recirculation partielle des gaz d'échappement à haute pression 4, munie d'une vanne, dite à haute pression, référencée 5, également dénommée « vanne EGR », et d'un échangeur thermique 5a dit échangeur EGR.

Le collecteur d'échappement 3 est également relié à la turbine 6a d'un turbocompresseur 6. La turbine 6a est par ailleurs reliée à la conduite d'échappement. Dans l'exemple illustré, la turbine 6a est du type à géométrie variable. En variante, on peut utiliser une turbine fixe associée à une vanne de décharge (dite « wastegate ») 8 montée dans une conduite de dérivation 7 en parallèle de la turbine 6a.

Le compresseur 6b du turbocompresseur 6 est relié d'une part à une conduite d'admission d'air frais 11 et d'autre part à un échangeur thermique 2a, dit échangeur de gaz suralimenté, qui sert à refroidir le mélange de gaz d'admission, constitué d'un mélange d'air prélevé dans l'atmosphère extérieure puis comprimé dans le compresseur 6b, et de gaz d'échappement provenant de la conduite de recirculation partielle 4.

Une vanne 9, également appelée ci-après « papillon », est interposé entre l'échangeur de gaz suralimenté 2a et le collecteur d'admission 2. Elle permet de régler le débit de gaz d'admission pénétrant dans le moteur.

Un observateur reçoit en entrée des grandeurs qui sont soit estimées, soit déjà mesurées :

Le débit du compresseur noté $Q_{comp}$
Le débit papillon noté $Q_{thr}$
Le débit turbine noté $Q_{turb}$
Le débit wastegate noté $Q_{wg}$ (Par définition, le débit $Q_{wg}$ est nul dans le cas d'une turbine à géométrie variable)
Le débit EGR haute pression noté $Q_{EGR}$ (égal à zéro en cas d'absence de circuit de recirculation des gaz d'échappement)
Le rendement volumétrique noté $\eta_{vol}$
La vitesse de rotation du moteur notée $N_e$
La richesse notée AFR
La température en amont du compresseur notée $\theta_{avc}$
La pression en amont du compresseur notée $p_{apc}$
La température en aval du compresseur notée $\theta_{apc}$
La température après échangeur de gaz suralimenté notée $\theta_{ape}$
La température des gaz EGR après échangeur EGR notée $\theta_{EGR}$
La température collecteur d'admission notée $\theta_{man}$
La température dans le collecteur d'échappement notée $\theta_{avt}$
La pression en aval de la turbine notée $p_{apt}$

L'observateur reçoit les trois mesures de pression suivantes, afin de réaliser la commande en boucle fermée :

La pression de suralimentation, qui est la pression après l'échangeur de gaz suralimenté, notée $p_{ape}$
La pression dans le collecteur d'admission noté $p_{man}$
La pression dans le collecteur d'échappement notée $p_{avt}$

La calibration de l'observateur est effectuée uniquement à partir d'un champ ISO standard, c'est-à-dire au banc moteur, dans des conditions de régime et de couple stabilisés, sous forme de quadrillage : par exemple, on fait varier le régime entre le régime de ralenti et le régime maximum du moteur, avec un pas de 250 tt/min, et on fait varier le couple entre le couple nul et le couple maximum, avec un pas de 5 Nm.

Dans l'exemple illustré, on utilisera un observateur bouclé. Le gain dans la boucle de retour est calculé à partir d'inégalités linéaires matricielles (acronyme anglophone « LMI » pour « Linear Matrix Inequalities ») de sorte à assurer la robustesse de l'estimateur dans un certain domaine. Ce domaine est définit sous la forme d'un polytope qui n'est ni plus ni moins qu'un polyèdre de dimension n.

L'observateur repose sur un modèle Linéaire à Paramètres Variants (LPV) du système.

Dans une première partie, on décrira donc le modèle LPV. Dans la deuxième partie, on décrira un schéma bloc de l'estimateur, de sorte à mettre en relief son aspect bouclé et on définira le polytope associé. Enfin, dans une dernière partie, la méthode pour calculer le gain de la boucle de retour sera décrite et expliquée.

On va maintenant décrire le modèle linéaire à paramètres variants du système.

La pression en amont de la turbine est estimée par l'intermédiaire d'une modélisation de type zero-dimension (0D). Au niveau de la turbine, on peut décrire le comportement dynamique de la pression en amont de la turbine $P_{avt}$ à partir des équations d'Euler :

$$\dot{p}_{avt} = \frac{\gamma \cdot r}{V_{avt}} \theta_{avt} \left( Q_{eng} + Q_{fuel} - Q_{exh} \right) \qquad (\mathrm{Eq.\ 1})$$

Avec :

$\gamma$ : le coefficient adiabatique,
r : la constante des gaz parfaits,
$V_{avt}$ : le volume du collecteur d'échappement,
$\theta_{avt}$ : la température dans le collecteur d'échappement,
$Q_{eng}$ : le débit moteur,
$Q_{fuel}$ : la quantité de carburant injectée et
$Q_{exh}$ : le débit à l'échappement

Le débit à l'échappement $Q_{exh}$ est défini de la façon suivante :

$$Q_{exh} = Q_{turb} + Q_{wg} + Q_{egr} \qquad (Eq.\ 2)$$

Avec :

$Q_{turb}$ : le débit traversant la turbine,
$Q_{wg}$ : le débit traversant la wastegate (dans le cas d'une turbine à géométrie variable, on a $Q_{wg}$ =0) et
$Q_{EGR}$ : le débit EGR haute pression si le moteur est équipé d'une telle boucle (dans le cas contraire, $Q_{EGR}$=0).

En explicitant $Q_{eng}$ , $Q_{fuel}$ et $Q_{exh}$ l'équation (Eq. 1) peut également s'écrire :

$$\dot{p}_{avt} = \frac{\gamma.V_{cyl}}{120V_{avt}} \frac{STO+AFR}{STO} N_e \eta_{vol} \frac{\theta_{avt}}{\theta_{man}} p_{man} - \frac{\gamma.r}{V_{avt}} \theta_{avt} \left( Q_{turb} + Q_{wg} + Q_{egr} \right) \ (Eq.3)$$

Avec :

$V_{cyl}$ : la cylindrée moteur,
STO : le rapport stœchiométrique associé au carburant,
AFR : la richesse,
$N_e$ : la vitesse de rotation du moteur,
$\eta_{vol}$ : le rendement volumétrique,
$\theta_{man}$ : la température collecteur d'admission et
$p_{man}$ : la pression collecteur d'admission.

On remarque que la pression collecteur $p_{man}$ intervient dans l'équation différentielle qui décrit le comportement dynamique de de la pression en amont de la turbine $P_{avt}$. Il faut donc également l'introduire dans le modèle :

$$\dot{p}_{man} = \frac{\gamma.r}{V_{man}} \theta_{man} \left( Q_{thr} - Q_{eng} \right) \qquad (Eq.\ 4)$$

Avec :

$V_{man}$ : le volume du collecteur d'admission et
$Q_{thr}$ : le débit traversant le papillon.

En explicitant $Q_{eng}$ , l'équation (Eq. 4) peut également s'écrire ainsi :

$$\dot{p}_{man} = \frac{\gamma.r}{V_{man}} \theta_{man} Q_{thr} - \frac{\gamma.V_{cyl}}{120.V_{man}} N_e \eta_{vol} p_{man} \qquad (Eq.\ 5)$$

La pression de suralimentation, qui est égale à la pression du gaz d'admission après l'échangeur de gaz suralimenté $p_{ape}$ est définie de la façon suivante :

$$\dot{p}_{ape} = \frac{\gamma.r}{V_{ape}} \left( Q_{comp} \theta_{apc} + Q_{EGR} \theta_{EGR} - Q_{thr} \theta_{ape} \right) \qquad (Eq.\ 6)$$

Avec :

$V_{ape}$ : le volume de l'échangeur, qui est égal au volume compris entre la sortie de l'échangeur de gaz suralimenté 2a et le papillon 9
$Q_{comp}$ : le débit compresseur,

$\theta_{apc}$ : la température des gaz en sortie du compresseur,

$\theta_{EGR}$ : la température des gaz EGR entrant dans le volume

Enfin, on peut écrire l'équation qui régit la dynamique de la vitesse de rotation du turbocompresseur $\omega_t$ à partir de l'équilibre des couples turbine $T_{qturb}$ et compresseur $T_{qcomp}$ :

$$\dot{\omega}_t = \frac{1}{J}\left(T_{qturb} - T_{qcomp}\right) \qquad (Eq.\ 7)$$

Avec :

J : l'inertie du turbocompresseur.

En explicitant les couples mis en jeu dans l'équation précédente (Eq. 7), on obtient l'équation suivante :

$$\dot{\omega}_t = \frac{1}{J}\left(\frac{Q_{turb}.c_p\left(\theta_{avt} - \theta_{turb}\right)}{\omega_t} - \frac{Q_{comp}.c_p\left(\theta_{apc} - \theta_{avc}\right)}{\omega_t}\right) \qquad (Eq.8)$$

Avec :

$c_p$ : la capacité calorifique à pression constante,

$\theta_{turb}$ : la température des gaz à la sortie de la turbine,

$\theta_{avc}$ : la température en amont du compresseur

L'expression est ici non linéaire puisque on a sur le membre de droite, $\omega_t$ au dénominateur. L'équation (Eq. 8) s'écrit alors de manière linéaire :

$$\left(\frac{1}{2}J\dot{\omega}_t^2\right) = Q_{turb}.c_p\left(\theta_{avt} - \theta_{turb}\right) - Q_{comp}.c_p\left(\theta_{apc} - \theta_{avc}\right) \qquad (Eq.\ 9)$$

En explicitant les températures $\theta_{turb}$, $\theta_{avc}$, $\theta_{apc}$, $\theta_{avt}$, on obtient une équation utilisable sous forme matricielle, à partir des entrées que l'on s'est fixées :

$$\left(\frac{1}{2}J\dot{\omega}_t^2\right) = c_p\theta_{avt}\eta_t\left(1 - \pi_t^{\frac{1-\gamma}{\gamma}}\right)Q_{turb} - c_p\theta_{avc}\frac{1}{\eta_c}\left(\pi_c^{\frac{\gamma-1}{\gamma}} - 1\right)Q_{comp} \qquad (Eq.\ 10)$$

Avec :

$\eta_t$ : le rendement turbine,

$\pi_t = \dfrac{P_{avt}}{P_{apt}}$ : le rapport de détente,

$P_{apt}$ : la pression en aval de la turbine,

$\eta_c$ : le rendement du compresseur et

$\pi_c = \dfrac{P_{apc}}{P_{avc}}$ : le rapport de compression.

Au final à partir des équations (Eq. 3), (Eq. 5), (Eq. 6) et (Eq. 10), le modèle LPV peut s'écrire sous forme matricielle de la façon suivante :

$$\begin{pmatrix} \dot{p}_{ape} \\ \dot{p}_{man} \\ \dot{p}_{avt} \\ \left(\frac{1}{2}J\dot{\omega}_t^2\right) \end{pmatrix} = \begin{pmatrix} 0 & 0 & 0 & 0 \\ 0 & \alpha_1 & 0 & 0 \\ 0 & \alpha_2 & 0 & 0 \\ 0 & 0 & 0 & 0 \end{pmatrix} \begin{pmatrix} p_{ape} \\ p_{man} \\ p_{avt} \\ \left(\frac{1}{2}J\dot{\omega}_t^2\right) \end{pmatrix} + \begin{pmatrix} \beta_1 & \beta_2 & 0 & 0 & \beta_3 \\ 0 & \beta_4 & 0 & 0 & 0 \\ 0 & 0 & \beta_5 & \beta_5 & \beta_5 \\ \beta_6 & 0 & \beta_7 & 0 & 0 \end{pmatrix} \begin{pmatrix} Q_{comp} \\ Q_{thr} \\ Q_{turb} \\ Q_{wg} \\ Q_{EGR} \end{pmatrix} \quad (Eq.\ 11)$$

Avec :

$$\alpha_1 = -\frac{\gamma V_{cyl}}{120 V_{man}} N_e \eta_{vol}$$

$$\alpha_2 = \frac{\gamma V_{cyl}}{120 V_{avt}} \left(\frac{14,7 + AFR}{14,7}\right) \frac{N_e \eta_{vol} \theta_{avt}}{\theta_{man}}$$

$$\beta_1 = \frac{\gamma . r}{V_{ape}} \theta_{apc}$$

$$\beta_2 = -\frac{\gamma . r}{V_{ape}} \theta_{ape}$$

$$\beta_3 = \frac{\gamma . r}{V_{ape}} \theta_{EGR}$$

$$\beta_4 = \frac{\gamma . r}{V_{man}} \theta_{man}$$

$$\beta_5 = -\frac{\gamma . r}{V_{avt}} \theta_{avt}$$

$$\beta_6 = -c_p \theta_{avc} \frac{1}{\eta_c} \left( \pi_c^{\frac{\gamma-1}{\gamma}} - 1 \right)$$

$$\beta_7 = c_p \theta_{avt} \eta_t \left( 1 - \pi_t^{\frac{1-\gamma}{\gamma}} \right)$$

Le modèle est bien de la forme caractéristique des LPV, à savoir :

$$\begin{cases} \dot{x} = A(p)x + Bu \\ y = Cx \end{cases} \quad (Eq.\ 12)$$

Où x est un vecteur d'états, u un vecteur d'entrées, A et B deux matrices caractéristiques du système, ρ est un ensemble de paramètres (bornés) dont dépend A. y est le vecteur des mesures accessibles parmi les états du système. Ici, il s'agit d'une combinaison des pressions $p_{ape}$, $p_{man}$ et $p_{avt}$.

Dans le cas présent, on retrouve les états du système, parmi ces paramètres. Le système est alors appelé « quasi-LPV ».

On va maintenant décrire le fonctionnement de l'observateur polytopique de pression en amont de la turbine.

A partir du système présenté ci-dessus, la synthèse d'un observateur polytopique est possible.

L'observateur peut être décrit par l'équation ci-dessous :

$$\begin{cases} \dot{\hat{x}} = A(p)\hat{x} + Bu + K(y - \hat{y}) \\ \hat{y} = \begin{pmatrix} \hat{p}_{ape} \\ \hat{p}_{man} \\ \hat{p}_{avt} \end{pmatrix} \end{cases} \qquad (\text{Eq. } 13)$$

Dans lequel les variables surmontés d'un accent circonflexe sont les sorties ou les états de l'observateur.

L'observateur se caractérise par un gain K. Il peut être constant ou bien dépendre des paramètres ρ. Ce dernier cas suggère donc qu'il évolue au cours du temps et sa valeur devra dès lors être recalculée en temps réel.

On va maintenant décrire la construction du polytope. Les grandeurs ayant une influence sur le vecteur de paramètres du modèle (Eq. 11) sont toutes bornées. Ces bornes suffisent à construire un polytope convexe, conditions nécessaires à la synthèse de l'observateur. Le système d'équations suivant illustre ces bornes :

$$\begin{cases} \underline{N_e} < N_e < \overline{N_e} \\ \underline{\eta_{vol}} < \eta_{vol} < \overline{\eta_{vol}} \\ \underline{AFR} < AFR < \overline{AFR} \\ \underline{\theta_{man}} < \theta_{man} < \overline{\theta_{man}} \\ \underline{\theta_{avt}} < \theta_{avt} < \overline{\theta_{avt}} \end{cases} \qquad (\text{Eq. } 14)$$

Dans lequel chaque grandeur φ est respectivement encadrée par sa borne inférieure $\underline{\varphi}$ et sa borne supérieure $\overline{\varphi}$.

A titre d'exemple, le tableau ci-dessous présente les valeurs à utiliser pour un moteur 1.2L essence suralimenté avec wastegate :

Tableau 1 : Définition du polytope dans le cas d'un moteur essence suralimenté

| $\underline{\varphi}$ | $\varphi$ | $\overline{\varphi}$ |
|---|---|---|
| 800 | $N_e$ | 6500 |
| 0,7 | $\eta_{vol}$ | 1 |
| 0,99 | $AFR$ | 1,01 |
| 298 | $\theta_{man}$ | 310 |
| 750 | $\theta_{avt}$ | 1250 |

On va maintenant décrire le calcul du gain de l'observateur.

La convergence de l'observateur est soumise au respect des inégalités matricielles ci-dessous, pour toutes les valeurs de i et de j.

$$\begin{bmatrix} P_i & (G_i A_i - F_i C)^T \\ G_i A_i - F_i C & G_i + G_i^T - P_j \end{bmatrix} > 0 \qquad (\text{Eq. } 15)$$

Avec :

$$(i,j) \in \{1,N\} \times \{1,N\}$$

Avec N : le nombre de paramètres, c'est-à-dire la longueur de $\rho$

Les matrices $G_i$, $F_i$, $P_i$ et $P_j$ sont inconnues et à déterminer.

Pour la détermination de ces matrices, il faut en fait résoudre les LMI présentées dans l'équation (Eq. 15). De nombreux solveurs sont disponibles, et en particulier, à titre d'exemple : la MPT toolbox (http://control.ee.ethz.ch/~mpt/). La résolution de ce problème se fait hors ligne, au moment de la construction de l'observateur. Cette méthode d'optimisation n'est pas le sujet de la présente description.

Le gain $K_i$ est alors donné, à chaque sommet du polytope par l'équation suivante :

$$K_i = G_i^{-1} F_i \qquad \text{(Eq. 16)}$$

L'ensemble des valeurs doit être stocké pour une utilisation en ligne.

A chaque instant, il faut donc récupérer l'ensemble du vecteur de paramètres $\rho$ et déterminer la valeur du gain $K_i$ à utiliser en effectuant une interpolation dans le polytope défini par l'équation (Eq. 14).

Selon un mode de réalisation alternatif, on peut faire le choix d'avoir un gain constant pour l'observateur. Cela permet d'éviter l'interpolation en ligne ainsi que le stockage de plusieurs valeurs. On gagne ainsi en mémoire et en temps de calcul. En revanche, puisque le gain est le même pour tous les points de fonctionnement du moteur, la convergence de l'observateur risque d'être plus lente. Cela s'explique par le fait que cette approche est plus conservative.

Ce mode de réalisation suit le même principe que le premier mode de réalisation, à la différence près qu'il faut résoudre le système simplifié suivant :

$$\begin{bmatrix} P_i & (GA_i - FC)^T \\ GA_i - FC & G + G^T - P_j \end{bmatrix} > 0 \qquad \text{(Eq. 17)}$$

Le gain K est alors directement donné par :

$$K = G^{-1} F \qquad \text{(Eq. 18)}$$

Si la résolution de l'équation (Eq. 14) est impossible, ou si les performances de l'observateur sont insuffisantes, il faut alors se tourner vers la première approche et résoudre l'équation (Eq. 15).

L'observateur décrit ci-dessus peut être employé pour estimer d'autres grandeurs que la vitesse de rotation du turbocompresseur, par exemple la pression de suralimentation, la masse d'air enfermée, etc. Il s'agit simplement d'écrire un modèle de type LPV (comme (Eq. 7)) impliquant la grandeur à estimer.

## Revendications

1. Procédé de détermination de la vitesse de rotation du turbocompresseur (6) d'un moteur à combustion interne de véhicule automobile, muni d'au moins un circuit de recirculation partielle des gaz d'échappement à haute pression (4) piqué entre le collecteur d'échappement (3) et le collecteur d'admission (2), qui comprend les étapes suivantes :

on détermine un vecteur des mesures accessibles comprenant la mesure de la pression avant turbine, de la pression dans le collecteur d'admission et de la pression après l'échangeur thermique de gaz suralimenté , on détermine l'écart entre le vecteur des mesures accessibles et le vecteur des mesures accessibles correspondant issu d'un observateur, on détermine un vecteur des dérivées temporelles des variables observées en fonction de l'écart entre le vecteur des mesures accessibles et le vecteur des mesures accessibles correspondant issu de l'observateur, et on détermine un vecteur des variables observées par intégration du vecteur des dérivées temporelles des variables observées,

le vecteur des variables observées comprenant des valeurs observées correspondant aux valeurs du vecteur des mesures accessibles et la vitesse de rotation du turbocompresseur.

2. Procédé selon la revendication 1, dans lequel on détermine le vecteur des dérivées temporelles des variables observées en réalisant les étapes suivantes :

on détermine le gain de l'observateur en fonction de l'écart entre un vecteur des mesures accessibles et un vecteur des mesures accessibles issues de l'observateur,
on détermine une première matrice d'état et une deuxième matrice d'état en fonction du modèle prédéterminé et de mesures, estimations et consignes de paramètres de fonctionnement du moteur à combustion interne, et
on détermine le vecteur des dérivées temporelles des variables observées en sommant le gain de l'observateur, le produit de la première matrice d'état par les valeurs de l'observateur des variables observées et la deuxième matrice d'état.

3. Procédé selon l'une quelconque des revendications précédentes, dans lequel on définit un polytope, puis on détermine un gain de l'observateur aux sommets du polytope, puis on interpole le gain de l'observateur aux sommets du polytope sur tout le volume du polytope pour obtenir le gain de l'observateur en chaque point.

4. Procédé selon la revendication 2, dans lequel on définit un polytope, puis on détermine un gain de l'observateur constant sur le polytope, fonction de la première matrice d'état et du vecteur des mesures accessibles.

5. Procédé selon l'une quelconque des revendications 3 ou 4, dans lequel le polytope est convexe et défini par les valeurs maximales et minimales de la vitesse de rotation du moteur, du rendement volumétrique, de la richesse de mélange, de la température du collecteur d'admission et de la température en amont de la turbine.

6. Procédé selon la revendication 2 ou l'une quelconque des revendications 3 à 5 dépendante de la revendication 2, dans lequel on détermine la première matrice d'état en fonction de la vitesse de rotation du moteur, du volume de cylindrée, du volume du collecteur d'échappement, du rendement volumique, de la température en amont de la turbine, de la température dans le collecteur d'admission, du volume avant la turbine et de la richesse de mélange.

7. Procédé selon la revendication 2 ou l'une quelconque des revendications 3 à 6 dépendante de la revendication 2, dans lequel on détermine la deuxième matrice d'état en fonction du coefficient adiabatique, de la constante des gaz parfaits, de la température en aval du compresseur, de la température après échangeur, du volume après échangeur, éventuellement de la température des gaz EGR après échangeur EGR, de la température collecteur, du volume collecteur, de la capacité calorifique à pression constante température en amont du compresseur, du rendement du compresseur, du rapport de compression, du rapport de détente, du rendement turbine, et de la température dans le collecteur d'échappement.

**Patentansprüche**

1. Verfahren zur Bestimmung der Drehzahl des Turboladers (6) eines Verbrennungsmotors eines Kraftfahrzeugs, der mit wenigstens einem Kreis der teilweisen Hochdruck-Abgasrückführung (4) versehen ist, der eine Verbindung zwischen dem Abgaskrümmer (3) und dem Ansaugkrümmer (2) herstellt,
welches die folgenden Schritte umfasst:

Es wird ein Vektor der zugänglichen Messungen bestimmt, welche die Messung des Drucks vor der Turbine, das Drucks im Ansaugkrümmer und des Drucks von aufgeladenem Gas nach dem Wärmetauscher umfasst,
es wird die Abweichung zwischen dem Vektor der zugänglichen Messungen und dem entsprechenden Vektor der zugänglichen Messungen, der von einem Beobachter stammt, bestimmt,
es wird ein Vektor der Ableitungen der beobachteten Variablen nach der Zeit in Abhängigkeit von der Abweichung zwischen dem Vektor der zugänglichen Messungen und dem entsprechenden Vektor der zugänglichen Messungen, der von dem Beobachter stammt, bestimmt, und
es wird ein Vektor der beobachteten Variablen durch Integration des Vektors der Ableitungen der beobachteten Variablen nach der Zeit bestimmt,
wobei der Vektor der beobachteten Variablen beobachtete Werte umfasst, die den Werten des Vektors der zugänglichen Messungen und der Drehzahl des Turboladers entsprechen.

**2.** Verfahren nach Anspruch 1, wobei der Vektor der Ableitungen der beobachteten Variablen nach der Zeit bestimmt wird, indem die folgenden Schritte ausgeführt werden:

Es wird die Verstärkung des Beobachters in Abhängigkeit von der Abweichung zwischen einem Vektor der zugänglichen Messungen und einem Vektor der zugänglichen Messungen, die von dem Beobachter stammen, bestimmt,
es werden eine erste Zustandsmatrix und eine zweite Zustandsmatrix in Abhängigkeit von dem vorbestimmten Modell und von Messungen, Schätzungen und Sollwerten von Betriebsparametern des Verbrennungsmotors bestimmt, und
es wird der Vektor der Ableitungen der beobachteten Variablen nach der Zeit bestimmt, indem die Verstärkung des Beobachters, das Produkt der ersten Zustandsmatrix mit den Werten des Beobachters der beobachteten Variablen und die zweite Zustandsmatrix addiert werden.

**3.** Verfahren nach einem der vorhergehenden Ansprüche, wobei ein Polytop definiert wird, anschließend eine Verstärkung des Beobachters an den Ecken des Polytops bestimmt wird und anschließend die Verstärkung des Beobachters an den Ecken des Polytops auf dem gesamten Volumen des Polytops interpoliert wird, um die Verstärkung des Beobachters in jedem Punkt zu erhalten.

**4.** Verfahren nach Anspruch 2, wobei ein Polytop definiert wird und anschließend eine konstante Verstärkung des Beobachters auf dem Polytop bestimmt wird, die von der ersten Zustandsmatrix und vom Vektor der zugänglichen Messungen abhängt.

**5.** Verfahren nach einem der Ansprüche 3 und 4, wobei das Polytop konvex ist und durch die maximalen und minimalen Werte der Drehzahl des Motors, des volumetrischen Wirkungsgrades, der Anreicherung des Gemisches, der Temperatur des Ansaugkrümmers und der Temperatur stromaufwärts der Turbine definiert ist.

**6.** Verfahren nach Anspruch 2 oder nach einem der Ansprüche 3 bis 5, wenn abhängig von Anspruch 2, wobei die erste Zustandsmatrix in Abhängigkeit von der Drehzahl des Motors, dem Hubraumvolumen, dem Volumen des Abgaskrümmers, dem volumetrischen Wirkungsgrad, der Temperatur stromaufwärts der Turbine, der Temperatur im Ansaugkrümmer, dem Volumen vor der Turbine und der Anreicherung des Gemisches bestimmt wird.

**7.** Verfahren nach Anspruch 2 oder nach einem der Ansprüche 3 bis 6, wenn abhängig von Anspruch 2, wobei die zweite Zustandsmatrix in Abhängigkeit vom adiabatischen Koeffizienten, von der idealen Gaskonstante, von der Temperatur stromabwärts des Verdichters, von der Temperatur nach dem Wärmetauscher, vom Volumen nach dem Wärmetauscher, eventuell von der Temperatur der AGR-Gase nach dem AGR-Wärmetauscher, von der Krümmertemperatur, vom Krümmervolumen, von der Wärmekapazität bei konstantem Druck Temperatur stromaufwärts des Verdichters, vom Wirkungsgrad des Verdichters, vom Verdichtungsverhältnis, vom Expansionsverhältnis, vom Wirkungsgrad der Turbine und von der Temperatur im Abgaskrümmer bestimmt wird.

**Claims**

**1.** Method for determining the rotational speed of the turbocharger (6) of an internal combustion engine of a motor vehicle, provided with at least one circuit for partial recirculation of the high-pressure exhaust gases (4) tapped between the exhaust manifold (3) and the intake manifold (2),
which comprises the following steps:

determining a vector of the accessible measurements comprising the measurement of the pressure upstream of the turbine, the pressure in the intake manifold and the pressure downstream of the heat exchanger for the supercharged gas,
determining the difference between the vector of the accessible measurements and the corresponding vector of the accessible measurements coming from an observer,
determining a vector of the time derivatives of the observed variables as a function of the difference between the vector of the accessible measurements and the corresponding vector of the accessible measurements coming from the observer, and
determining a vector of the observed variables by integrating the vector of the time derivatives of the observed variables,
the vector of the observed variables comprising observed values corresponding to the values of the vector of the accessible measurements and the rotational speed of the turbocharger.

2. Method according to Claim 1, wherein the vector of the time derivatives of the observed variables is determined by carrying out the following steps:

    determining the gain of the observer as a function of the difference between a vector of the accessible measurements and a vector of the accessible measurements coming from the observer,
    determining a first state matrix and a second state matrix as a function of the predetermined model and as a function of measurements, estimations and operating parameter set points of the internal combustion engine, and
    determining the vector of the time derivatives of the observed variables by adding together the gain of the observer, the product of the first state matrix by the values of the observer of the observed variables and the second state matrix.

3. Method according to either one of the preceding claims, involving defining a polytope, then determining a gain of the observer at the peaks of the polytope, then interpolating the gain of the observer at the peaks of the polytope over the entire volume of the polytope in order to obtain the gain of the observer at each point.

4. Method according to Claim 2, involving defining a polytope, then determining a gain of the observer that is constant over the polytope, as a function of the first state matrix and the vector of the accessible measurements.

5. Method according to either one of Claims 3 and 4, wherein the polytope is convex and is defined by maximum and minimum values of the rotational speed of the engine, the volumetric efficiency, the richness of the mixture, the temperature of the intake manifold and the temperature upstream of the turbine.

6. Method according to Claim 2 or any one of Claims 3 to 5 that is dependent on Claim 2, wherein the first state matrix is determined as a function of the rotational speed of the engine, of the displacement volume, of the volume of the exhaust manifold, of the volumetric efficiency, of the temperature upstream of the turbine, of the temperature in the intake manifold, of the volume upstream of the turbine and of the richness of the mixture.

7. Method according to Claim 2 or any one of Claims 3 to 6 that is dependent on Claim 2, wherein the second state matrix is determined as a function of the adiabatic coefficient, of the ideal gas constant, of the temperature downstream of the compressor, of the temperature downstream of the exchanger, of the volume downstream of the exchanger, possibly of the temperature of the EGR gases downstream of the EGR exchanger, of the manifold temperature, of the manifold volume, of the heat capacity at constant pressure temperature upstream of the compressor, of the efficiency of the compressor, of the compression ratio, of the expansion ratio, of the turbine efficiency, and of the temperature in the exhaust manifold.

# FIGURE UNIQUE

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090314082 A
- JP 2003328841 A
- WO 2012013881 A1

**Littérature non-brevet citée dans la description**

- Global Airpath Control for a Turbocharged Diesel HC-CI Engine. *Oil & Gas Science and Technology - Rev. IFP,* 2008, vol. 63 (4), 553-561
- Modeling and Control of the Air System of a Turbocharged Gasoline Engine. *Control Engineering Practice,* Mars 2011, vol. 19 (3), ISSN 0967-0661, 287-297